# EUROPÄISCHE PATENTSCHRIFT

(11) **EP 3 565 857 B1**
(45) Veröffentlichungstag und Bekanntmachung des Hinweises auf die Patenterteilung: **25.03.2020**
(21) Anmeldenummer: 17818541.9
(22) Anmeldetag: 15.12.2017
(51) Int. Cl.: C08L 83/04

(54) **VERNETZBARE MASSEN AUF DER BASIS VON ORGANYLOXYGRUPPEN AUFWEISENDEN ORGANOPOLYSILOXANEN**
CROSS-LINKABLE MASSES BASED ON ORGANOPOLYSILOXANES COMPRISING ORGANYLOXY GROUPS
MATIÈRES RÉTICULABLES À BASE D'ORGANOPOLYSILOXANES PRÉSENTANT DES GROUPES ORGANYLOXY

(43) Veröffentlichungstag der Anmeldung: 13.11.2019
(73) Patentinhaber: Wacker Chemie AG, 81737 München (DE)
(72) Erfinder: SCHINDLER, Wolfram, 84577 Tüßling (DE); KAISER, Michael, 84489 Burghausen (DE)
(74) Vertreter: Budczinski, Angelika
(86) Internationale Anmeldenummer: PCT/EP2017/083075
(87) Internationale Veröffentlichungsnummer: WO 2019/114987

(56) Entgegenhaltungen:
- WO-A1-93/10186

## Beschreibung

Die Erfindung betrifft vernetzbare Massen auf der Basis von Organyloxygruppen aufweisenden Organopolysiloxanen mit verbessertem Vernetzungsverhalten, insbesondere verbesserter Frühbeständigkeit, Verfahren zu deren Herstellung sowie deren Verwendung. Unter Ausschluss von Wasser lagerfähige, bei Zutritt von Wasser bei Raumtemperatur zu Elastomeren vulkanisierende Einkomponenten-Dichtmassen (RTV-1) sind seit langem bekannt. Diese Produkte werden in großen Mengen zum Beispiel in der Bauindustrie als Dichtstoffe für Anschluss- oder Fassadenfugen eingesetzt oder können als elastische Beschichtungen aufgetragen werden. Die Basis dieser Mischungen sind Polymere, die mit Silylgruppen terminiert sind, die reaktive Substituenten wie OH-Gruppen oder hydrolysierbare Gruppen, wie zum Beispiel Alkoxygruppen, tragen. Des Weiteren können diese Dichtmassen Füllstoffe, Weichmacher, Vernetzer, Katalysatoren sowie Additive enthalten. Hierzu sei beispielsweise auf EP-A 327847, EP-A 1865029, EP-A 1479720 und EP-A 1042400 verwiesen. Alkoxy-RTV-1 Massen sind aufgrund ihrer neutralen und geruchlosen Vernetzung und der sehr guten Haftung auf unterschiedlichen Substraten gegenüber anderen Neutralsystemen bevorzugt. Die Durchhärtung dieser Formulierungen ist oft inhomogen, was gerade im Anfangsstadium der Härtung zu Riss- oder Blasenbildung führen kann, speziell, wenn sich die Fugen auch noch bewegen. Man spricht dabei von einer mangelnden Frühbeständigkeit, was unter ungünstigen Bedingungen, wie niedriger Temperaturen oder geringer Luftfeuchtigkeit, zu einem Versagen der Dichtfunktion führen kann.

Das Dokument WO 93/10186 betrifft wie die Anmeldung vernetzbare Massen, die Polysiloxane mit aliphatischen Mehrfachbindungen und Silane, die Gruppen mit basischem Stickstoff enthalten, aufweisen.

Es bestand nun die Aufgabe, vernetzbare Massen auf der Basis von Organyloxygruppen aufweisenden Organopolysiloxanen bereitzustellen, die ein verbessertes Vernetzungsverhalten inklusive erhöhter Frühbeständigkeit aufweisen.

Gegenstand der Erfindung sind vernetzbare Massen enthaltend
(A) Organyloxygruppen aufweisende Organopolysiloxane aus Einheiten der Formel (I)

   RₐR¹_{b}(OR²)_{c}SiO_{(4-a-b-c)/2} (I),

   wobei
   R gleich oder verschieden sein kann und einwertige, SiC-gebundene, gegebenenfalls substituierte, von aliphatischen Kohlenstoff-Kohlenstoff-Mehrfachbindungen freie Kohlenwasserstoffreste darstellt,
   R¹ gleich oder verschieden sein kann und einwertige, SiC-gebundene, gegebenenfalls substituierte Kohlenwasserstoffreste mit aliphatischen Kohlenstoff-Kohlenstoff-Mehrfachbindungen bedeutet,
   R² gleich oder verschieden sein kann und einwertige, gegebenenfalls substituierte Kohlenwasserstoffreste bedeutet,
   a 0, 1, 2 oder 3 ist,
   b 0 oder 1 ist und
   c 0, 1, 2 oder 3 ist,
   mit der Maßgabe, dass in Formel (I) die Summe a+b+c≤3 ist und in mindestens einer Einheit b und c verschieden 0 sind,
(B) Organosiliciumverbindungen der Formel (II)

   (R⁴O)_{d}SiR³_{(4-d)} (II),

   wobei
   R³ gleich oder verschieden sein kann und einwertige, SiCgebundene, gegebenenfalls substituierte Kohlenwasserstoffreste bedeutet,
   R⁴ gleich oder verschieden sein kann und Wasserstoffatom oder einwertige, gegebenenfalls substituierte Kohlenwasserstoffreste bedeutet,
   d 2, 3 oder 4, bevorzugt 3 oder 4, besonders bevorzugt 3, ist, mit der Maßgabe, dass in Organosiliciumverbindung (B) mindestens ein Rest R⁴ mit mindestens zwei Kohlenstoffatomen anwesend ist,
   und/oder deren Teilhydrolysate
      und
(C) basischen Stickstoff aufweisende Organosiliciumverbindungen der Formel (III)

   (R⁶O)ₑSiR⁵₍₄₋ₑ₎ (III),

   wobei
   R⁵ gleich oder verschieden sein kann und einwertige, SiCgebundene Reste mit basischem Stickstoff bedeutet,
   R⁶ gleich oder verschieden sein kann und Wasserstoffatom oder einwertige, gegebenenfalls substituierte Kohlenwasserstoffreste bedeutet,
   e 2 oder 3, bevorzugt 3, ist,
   und/oder deren Teilhydrolysate.

Im Rahmen der vorliegenden Erfindung sollen von dem Begriff Organopolysiloxane sowohl polymere, oligomere wie auch dimere Siloxane mitumfasst werden.

Bei den vernetzbaren Massen handelt es sich bevorzugt um durch Kondensationsreaktion vernetzbare Massen.

Im Rahmen der vorliegenden Erfindung soll die Bezeichnung "Kondensationsreaktion" auch einen gegebenenfalls vorangehenden Hydrolyseschritt mitumfassen.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert. -Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Methoxyethyl-, Ethoxyethyl-, Ethoxyethoxyethylrest oder Polyoxyalkylreste wie Polyethylenglykol- oder Polypropylenglycolreste.

Bevorzugt handelt es sich bei Rest R um einwertige, von aliphatischen Kohlenstoff-Kohlenstoff-Mehrfachbindungen freie Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, besonders bevorzugt um einwertige, von aliphatischen Kohlenstoff-Kohlenstoff-Mehrfachbindungen freie Kohlenwasserstoffreste mit 1 bis 12 Kohlenstoffatomen, insbesondere um den Methylrest.

Beispiele für Reste R¹ sind Alkenylreste, wie lineare oder verzweigte 1-Alkenylreste wie der Vinylrest und 1-Propenylrest sowie der 2-Propenylrest.
Bevorzugt handelt es sich bei Rest R¹ um einwertige, aliphatische Kohlenstoff-Kohlenstoff-Mehrfachbindungen aufweisende Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Po-ly)glykolresten substituiert sind, besonders bevorzugt um einwertige, aliphatische Kohlenstoff-Kohlenstoff-Mehrfachbindungen aufweisende Kohlenwasserstoffreste mit 1 bis 12 Kohlenstoffatomen, insbesondere um den Vinylrest.

Beispiele für Reste R² sind die für R und R¹ angegebenen einwertigen Reste.

Bevorzugt handelt es sich bei Rest R² um einwertige, gegebenenfalls substituierte Kohlenwasserstoffreste mit 1 bis 12 Kohlenstoffatomen, die durch Sauerstoffatome unterbrochen sein können, besonders bevorzugt um Alkylreste mit 1 bis 6 Kohlenstoffatomen, insbesondere um den Methyl- oder Ethylrest, ganz besonders bevorzugt um den Methylrest.

Bevorzugt handelt es sich bei erfindungsgemäß eingesetzten Organopolysiloxanen (A) um im Wesentlichen lineare, organyloxyterminierte Organopolysiloxane, besonders bevorzugt um solche der Formel (IV)

(OR²)_{3-f}R¹_{f}Si-(SiR₂-O)_{g}-SiR¹_{f}(OR²)_{3-f} (IV),

wobei
R, R¹ und R² jeweils gleich oder verschieden sein können und eine der oben angegebenen Bedeutungen haben,
g gleich 30 bis 5000 ist und
f gleich 0, 1 oder 2, bevorzugt 1, ist,
mit der Maßgabe, dass in Formel (IV) in mindestens einer Einheit f verschieden 0 ist.

Obwohl in Formel (IV) nicht angegeben, können die erfindungsgemäß eingesetzten Organopolysiloxane (A) der Formel (IV) herstellungsbedingt einen geringen Anteil an Verzweigungen, bevorzugt bis maximal 500 ppm aller Si-Einheiten, insbesondere keine, aufweisen.

Obwohl in den Formeln (I) und (IV) nicht angegeben, können die erfindungsgemäß eingesetzten Organopolysiloxane (A) herstellungsbedingt einen geringen Anteil von Hydroxylgruppen, bevorzugt bis maximal 5 % aller Si-gebundenen Reste, aufweisen.

Bevorzugte Beispiele für Organopolysiloxane (A) sind (MeO)₂MeSiO[SiMe₂O]₂₀₀₋₂₀₀₀SiVi(OMe)₂ (MeO)₂ViSiO[SiMe₂O]₂₀₀₋₂₀₀₀SiVi(OMe)₂, (MeO)₂MeSiO[SiMe₂O]₂₀₀₋₃₀₀₀SiViMe(OMe), (MeO)ViMeSiO[SiMe₂O]₂₀₀₋₂₀₀₀SiViMe(OMe) oder (MeO)ViMeSiO[SiMe₂O]₂₀₀₋₂₀₀₀SiVi(OMe)₂, wobei (MeO)₂MeSiO[SiMe₂O]₂₀₀₋₂₀₀₀SiVi(OMe)₂ oder (MeO)₂ViSiO[SiMe₂O]₂₀₀₋₂₀₀₀SiVi(OMe)₂ besonders bevorzugt sind, insbesondere (MeO)₂ViSiO[SiMe₂O]₂₀₀₋₂₀₀₀SiVi(OMe)₂.

Die erfindungsgemäß eingesetzten Organopolysiloxane (A) haben eine Viskosität von bevorzugt 10⁴ bis 10⁶ mPas, besonders bevorzugt 50 000 bis 500 000 mPas, jeweils bei 25°C.

Bei den Organopolysiloxanen (A) handelt es sich um handelsübliche Produkte bzw. können diese nach in der Siliciumchemie gängigen Methoden vor der Abmischung hergestellt und isoliert werden.

Beispiele für Reste R³ sind die für R und R¹ angegebenen einwertigen Reste.

Bevorzugt handelt es sich bei Rest R³ um einwertige, gegebenenfalls mit Ethergruppen, Estergruppen, (Poly)glykolresten oder Triorganyloxysilylgruppen substituierte Kohlenwasserstoffreste mit 1 bis 12 Kohlenstoffatomen, besonders bevorzugt um Alkylreste mit 1 bis 12 Kohlenstoffatomen oder Alkenylreste mit 1 bis 12 Kohlenstoffatomen, insbesondere um den Methyl- und den Vinylrest.

Beispiele für Reste R⁴ sind Wasserstoffatom sowie die für R und R¹ angegebenen einwertigen Reste.

Bevorzugt handelt es sich bei Rest R⁴ um einwertige, gegebenenfalls substituierte Kohlenwasserstoffreste mit 1 bis 12 Kohlenstoffatomen, die durch Sauerstoffatome unterbrochen sein können, besonders bevorzugt um Alkylreste mit 1 bis 6 Kohlenstoffatomen, insbesondere um den Methyl- oder Ethylrest, ganz besonders bevorzugt um den Ethylrest.

Bevorzugt handelt es sich bei den in den erfindungsgemäßen Massen eingesetzten Organosiliciumverbindungen (B) um Silane mit mindestens einem Ethoxyrest oder deren Teilhydrolysate, besonders bevorzugt um Tetraethoxysilan, Methyltriethoxysilan, Dimethyldiethoxysilan, Vinyltriethoxysilan, Vinyl-methyldiethoxysilan, Phenyl-triethoxysilan, Phenylmethyldiethoxysilan oder 1,2-Bis(triethoxysilyl)ethan oder deren Teilhydrolysate, insbesondere um Tetraethoxysilan, Methyltriethoxysilan oder Vinyltriethoxysilan oder deren Teilhydrolysate, ganz besonders bevorzugt um Methyltriethoxysilan oder Vinyltriethoxysilan oder deren Teilhydrolysate, insbesondere bevorzugt um Vinyltriethoxysilan oder dessen Teilhydrolysate.

Bei den Teilhydrolysaten (B) kann es sich dabei um Teilhomohydrolysate handeln, d.h. Teilhydrolysate von einer Art von Organosiliciumverbindung der Formel (II), wie auch um Teilcohydrolysate, d.h. Teilhydrolysate von mindestens zwei verschiedenen Arten von Organosiliciumverbindungen der Formel (II).

Handelt es sich bei den in den erfindungsgemäßen Massen eingesetzten Verbindungen (B) um Teilhydrolysate von Organosiliciumverbindungen der Formel (II), so sind solche mit bis zu 10 Siliciumatomen bevorzugt.

Die in den erfindungsgemäßen Massen gegebenenfalls eingesetzten Vernetzer (B) sind handelsübliche Produkte bzw. können nach in der Siliciumchemie bekannten Verfahren hergestellt werden.

Die erfindungsgemäßen Massen enthalten Komponente (B) in Mengen von vorzugsweise 0,5 bis 15,0 Gewichtsteilen, besonders bevorzugt 0,5 bis 10,0 Gewichtsteilen, insbesondere 1,0 bis 3,5 Gewichtsteilen, jeweils bezogen auf 100 Gewichtsteile Organopolysiloxane (A).

Beispiele für Reste R⁵ sind Reste der Formeln H₂NCH₂-, H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃- und (C₂H₅)₂N(CH₂)₂-.

Bevorzugt handelt es sich bei Rest R⁵ um H₂N(CH₂)₃-, H₂N(CH₂)₂NH(CH₂)₃-, H₃CNH(CH₂)₃-, C₂H₅NH(CH₂)₃- oder cyclo-C₆H₁₁NH(CH₂)₃-Rest, insbesondere um den H₂N(CH₂)₂NH(CH₂)₃-Rest.

Beispiele für Rest R⁶ sind Wasserstoffatom sowie die für Rest R² angegebenen Beispiele.

Bevorzugt handelt es sich bei Rest R⁶ um einwertige, gegebenenfalls substituierte Kohlenwasserstoffreste mit 1 bis 12 Kohlenstoffatomen, die durch Sauerstoffatome unterbrochen sein können, besonders bevorzugt um Alkylreste mit 1 bis 6 Kohlenstoffatomen, insbesondere um den Methyl- oder Ethylrest.

Bevorzugt handelt es sich bei den Organosiliciumverbindungen (C) um 3-Aminopropyl-trimethoxysilan, 3-Aminopropyl-triethoxysilan, 3-Aminopropyl-methyldimethoxysilan, 3-Aminopropyl-methyldiethoxysilan, N-(2-Aminoethyl)-3-aminopropyl-trimethoxysilan, N-(2-Aminoethyl)-3-aminopropyl-triethoxysilan, N-(2-Aminoethyl)-3-aminopropyl-methyldimethoxysilan, N-Phenyl-3-aminopropyl-trimethoxysilan, N-Phenyl-3-aminopropyl-methyldimethoxysilan, N-Phenyl-3-aminopropyl-triethoxysilan oder N-Phenyl-3-aminopropyl-methyldiethoxysilan oder weitere N-Alkyl-oder N,N-Dialkyl-Derivate des 3-Aminopropyl-trimethoxysilans, 3-Aminopropyl-triethoxysilans, 3-Aminopropyl-methyldimethoxysilans oder 3-Aminopropyl-methyldiethoxysilans oder deren Teilhydrolysate, wobei es sich bei den genannten N-Alkylresten vorzugsweise um Methyl-, Ethyl-, n-Propyl-, i-Propyl-, n-Butyl-, i-Butyl-, t-Butyl-, Cyclohexyl- oder die verschiedenen verzweigten oder unverzweigten Pentyl- oder Hexylreste handelt.

Besonders bevorzugt handelt es sich bei den Verbindungen (C) um 3-Aminopropyl-trimethoxysilan, 3-Aminopropyl-triethoxysilan, N-(2-Aminoethyl)-3-aminopropyl-trimethoxysilan oder N-(2-Aminoethyl)-3-aminopropyl-triethoxysilan, insbesondere um N-(2-Aminoethyl)-3-aminopropyl-trimethoxysilan oder N-(2-Aminoethyl)-3-aminopropyl-triethoxysilan.

Die in den erfindungsgemäßen Massen eingesetzten Verbindungen (C) sind handelsübliche Produkte bzw. können nach in der Siliciumchemie bekannten Verfahren hergestellt werden.

Die erfindungsgemäßen Massen enthalten Komponente (C) in Mengen von vorzugsweise 0,5 bis 15,0 Gewichtsteilen, besonders bevorzugt 0,5 bis 5,0 Gewichtsteilen, insbesondere 0,5 bis 3,0 Gewichtsteilen, jeweils bezogen auf 100 Gewichtsteile Organopolysiloxane (A).

Bevorzugt liegt das Gewichtsverhältnis von Komponente (B) zu Komponente (C) im Bereich von 2:1 bis 1:2, besonders bevorzugt im Bereich von 3:2 bis 2:3.

Zusätzlich zu den Komponenten (A), (B) und (C) können die erfindungsgemäßen Massen nun alle weiteren Stoffe enthalten, die auch bisher in durch Kondensationsreaktion vernetzbaren Massen eingesetzt worden sind, wie z.B. (D) Weichmacher, (E) Füllstoffe, (F) Katalysatoren, (G) Stabilisatoren und (H) Additive.

Beispiele für gegebenenfalls eingesetzte Weichmacher (D) sind bei Raumtemperatur und einem Druck von 1013 hPa flüssige, mit Trimethylsiloxygruppen terminierte Dimethylpolysiloxane, insbesondere mit Viskositäten bei 25°C im Bereich zwischen 20 und 5000 mPas, bei Raumtemperatur und einem Druck von 1013 hPa flüssige Organopolysiloxane, die im Wesentlichen aus SiO_{3/2}-, SiO_{2/2}- und SiO_{1/2}-Einheiten, sogenannte T-, D- und M-Einheiten, bestehen, sowie hochsiedende Kohlenwasserstoffe, wie beispielsweise Paraffinöle oder Mineralöle bestehend im Wesentlichen aus naphthenischen und paraffinischen Einheiten.

Bevorzugt handelt es sich bei dem gegebenenfalls eingesetzten Weichmacher (D) um lineare Polydimethylsiloxane mit Trimethylsilylendgruppen.

Falls die erfindungsgemäßen Massen Weichmacher (D) enthalten, handelt es sich um Mengen von vorzugsweise 10 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A). Bevorzugt enthalten die erfindungsgemäßen Massen Komponente (D).

Beispiele für Füllstoffe (E) sind nicht verstärkende Füllstoffe, also Füllstoffe mit einer BET-Oberfläche von bis zu 50 m²/g, wie unbeschichtete Calciumcarbonate, beschichtete Calciumcarbonate, Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Gips, Siliciumnitrid, Siliciumcarbid, Bornitrid oder Glas- und Kunststoffpulver, wie Polyacrylnitrilpulver. Beispiele für verstärkende Füllstoffe, also Füllstoffe mit einer BET-Oberfläche von mehr als 50 m²/g sind pyrogen hergestellte Kieselsäure, gefällte Kieselsäure, Ruße, wie Furnace- und Acetylenruß und Silicium-Aluminium-Mischoxide großer BET-Oberfläche. Ferner können auch faserförmige Füllstoffe wie Asbest oder Kunststofffasern verwendet werden. Die genannten Füllstoffe können hydrophobiert sein, beispielsweise durch die Behandlung mit Organosilanen bzw. -siloxanen, Stearinsäurederivat oder durch Veretherung von Hydroxylgruppen zu Alkoxygruppen.

Falls Füllstoffe (E) eingesetzt werden, handelt es sich bevorzugt um unbehandelte Calciumcarbonate, hydrophile, pyrogen hergestellte Kieselsäure oder hydrophobe, pyrogen hergestellte Kieselsäure.

Falls die erfindungsgemäßen Massen Füllstoffe (E) enthalten, handelt es sich um Mengen von vorzugsweise 10 bis 500 Gewichtsteilen, bevorzugt 10 bis 200 Gewichtsteilen, besonders bevorzugt 50 bis 200 Gewichtsteilen, jeweils bezogen auf 100 Gewichtsteile Organopolysiloxan (A).

Als Katalysator (F) können alle Härtungsbeschleuniger, die auch bisher in durch Kondensationsreaktion vernetzbare Massen eingesetzt werden, verwendet werden. Beispiele für gegebenenfalls eingesetzte Katalysatoren (F) sind organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen und organofunktionellen Alkoxysilane, wie Tetraethoxysilan und Aminopropyl-triethoxysilan, bevorzugt sind Di-n-butylzinndilaurat, Dioctylzinndilaurat, Umsetzungsprodukte von Dibutyl- und Dioctylzinnoxid mit Tetraethylsilikat-Hydrolysat oder Mischhydrolysaten mit Aminopropylsilanen, insbesondere bevorzugt Di-n-butylzinnoxid in Tetraethylsilikat-Hydrolysat.

Falls die erfindungsgemäßen Massen Katalysatoren (F) enthalten, was bevorzugt ist, handelt es sich um Mengen von vorzugsweise 0,01 bis 3 Gewichtsteilen, bevorzugt 0,05 bis 2 Gewichtteilen, jeweils bezogen auf 100 Gewichtsteile Organopolysiloxan (A).

Bevorzugte Beispiele für Stabilisatoren (G) sind Phosphorsäure, Phosphonsäuren, Phosphonsäure-alkylester und Phosphorsäurealkylester.

Falls die erfindungsgemäßen Massen Stabilisatoren (G) enthalten, was bevorzugt ist, handelt es sich um Mengen von vorzugsweise 0,01 bis 100 Gewichtsteile, besonders bevorzugt 0,1 bis 30 Gewichtsteilen, insbesondere 0,3 bis 10 Gewichtsteilen, jeweils bezogen auf 100 Gewichtsteile Organopolysiloxan (A).

Beispiele für Additive (H) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Fungizide, Hitzestabilisatoren, Scavenger, wie Si-N enthaltende Silazane oder Silylamide, Cokatalysatoren, Thixotropiermittel, wie beispielsweise Polyethylen-, Polypropylenglycole oder Copolymere daraus, organischen Lösungsmittel, wie Alkylaromaten, Paraffinöle, sowie beliebige Siloxane, die unterschiedlich zu Komponente (A) sind.

Falls die erfindungsgemäßen Massen Additive (H) enthalten, handelt es sich um Mengen von vorzugsweise 0,01 bis 100 Gewichtsteilen, besonders bevorzugt 0,1 bis 30 Gewichtsteilen, insbesondere 0,3 bis 10 Gewichtsteilen, jeweils bezogen auf 100 Gewichtsteile Organopolysiloxan (A).

Bevorzugt handelt es sich bei den erfindungsgemäßen Massen um solche enthaltend
(A) Organopolysiloxane aus Einheiten der Formel (I),
(B) Organosiliciumverbindungen der Formel (II) mit mindestens einem R⁴ gleich Ethylrest und/oder deren Teilhydrolysate,
(C) basischen Stickstoff aufweisende Organosiliciumverbindungen der Formel (III) und/oder deren Teilhydrolysate,
   gegebenenfalls
(D) Weichmacher,
   gegebenenfalls
(E) Füllstoffe,
   gegebenenfalls
(F) Katalysatoren,
   gegebenenfalls
(G) Stabilisatoren und
   gegebenenfalls
(H) Additive.

Besonders bevorzugt handelt es sich bei den erfindungsgemäßen Massen um solche enthaltend
(A) Organopolysiloxane der Formel (IV) mit R¹ gleich Vinylrest,
(B) Organosiliciumverbindungen der Formel (II) mit mindestens einem R⁴ gleich Ethylrest und/oder deren Teilhydrolysate,
(C) basischen Stickstoff aufweisende Organosiliciumverbindungen der Formel (III) ausgewählt aus N-(2-Aminoethyl)-3-aminopropyl-trimethoxysilan und N-(2-Aminoethyl)-3-aminopropyl-triethoxysilan und deren Teilhydrolysate,
(D) Weichmacher,
   gegebenenfalls
(E) Füllstoffe,
   gegebenenfalls
(F) Katalysatoren,
(G) Stabilisatoren und
   gegebenenfalls
(H) Additive,
   mit der Maßgabe, dass das Gewichtsverhältnis von Komponente (B) zu Komponente (C) vorzugsweise im Bereich von 2:1 bis 1:2 liegt.

Insbesondere handelt es sich bei den erfindungsgemäßen Massen um solche enthaltend
(A) Organopolysiloxane ausgewählt aus den Verbindungen (MeO)₂MeSiO[SiMe₂O]₂₀₀₋₂₀₀₀SiVi(OMe)₂ (MeO)₂ViSiO [SiMe₂O]₂₀₀₋₂₀₀₀SiVi(OMe)₂, (MeO)₂MeSiO[SiMe₂O]₂₀₀₋₂₀₀₀SiViMe(OMe), (MeO)ViMeSiO[SiMe₂O]₂₀₀₋₂₀₀₀SiViMe(OMe) und (MeO)ViMeSiO[SiMe₂O]₂₀₀₋₂₀₀₀SiVi(OMe)₂,
(B) Organosiliciumverbindungen ausgewählt aus den Verbindungen Tetraethoxysilan, Methyltriethoxysilan, Dimethyldiethoxysilan, Vinyltriethoxysilan, Vinyl-methyldiethoxysilan, Phenyl-triethoxysilan, Phenylmethyldiethoxysilan, 1,2-Bis(triethoxysilyl)ethan oder deren Teilhydrolysate, insbesondere um Tetraethoxysilan, Methyltriethoxysilan und Vinyltriethoxysilan und deren Teilhydrolysate,
(C) basischen Stickstoff aufweisende Organosiliciumverbindungen ausgewählt aus N-(2-Aminoethyl)-3-aminopropyl-trimethoxysilan und N-(2-Aminoethyl)-3-aminopropyl-triethoxysilan und deren Teilhydrolysate,
(D) Weichmacher,
   gegebenenfalls
(E) Füllstoffe,
(F) Katalysatoren,
(G) Stabilisatoren und
   gegebenenfalls
(H) Additive,
   mit der Maßgabe, dass das Gewichtsverhältnis von Komponente (B) zu Komponente (C) vorzugsweise im Bereich von 2:1 bis 1:2 liegt.

In einer weiteren insbesondere bevorzugten Ausführungsform handelt es sich bei den erfindungsgemäßen Massen um solche enthaltend
(A) Organopolysiloxane ausgewählt aus den Verbindungen (MeO)₂MeSiO[SiMe₂O]₂₀₀₋₂₀₀₀SiVi(OMe)₂ und (MeO)₂ViSiO [SiMe₂O]₂₀₀₋₂₀₀₀SiVi(OMe)₂,
(B) Organosiliciumverbindungen ausgewählt aus den Verbindungen Tetraethoxysilan, Methyltriethoxysilan und Vinyltriethoxysilan, sowie deren Teilhydrolysate,
(C) basischen Stickstoff aufweisende Organosiliciumverbindungen ausgewählt aus N-(2-Aminoethyl)-3-aminopropyl-trimethoxysilan und N-(2-Aminoethyl)-3-aminopropyl-triethoxysilan und deren Teilhydrolysate,
(D) Weichmacher,
   gegebenenfalls
(E) Füllstoffe,
(F) Katalysatoren,
(G) Stabilisatoren und
   gegebenenfalls
(H) Additive,
   mit der Maßgabe, dass das Gewichtsverhältnis von Komponente (B) zu Komponente (C) vorzugsweise im Bereich von 2:1 bis 1:2 liegt.

In einer weiteren insbesondere bevorzugten Ausführungsform handelt es sich bei den erfindungsgemäßen Massen um solche enthaltend
(A) Organopolysiloxane ausgewählt aus den Verbindungen (MeO)₂MeSiO[SiMe₂O]₂₀₀₋₂₀₀₀SiVi(OMe)₂ und (MeO)₂ViSiO[SiMe₂O]₂₀₀₋₂₀₀₀SiVi(OMe)₂,
(B) Organosiliciumverbindungen ausgewählt aus den Verbindungen Methyltriethoxysilan und Vinyltriethoxysilan und deren Teilhydrolysate,
(C) basischen Stickstoff aufweisende Organosiliciumverbindungen ausgewählt aus N-(2-Aminoethyl)-3-aminopropyl-trimethoxysilan und N-(2-Aminoethyl)-3-aminopropyl-triethoxysilan und deren Teilhydrolysate,
(D) Weichmacher,
   gegebenenfalls
(E) Füllstoffe,
(F) Katalysatoren,
(G) Stabilisatoren und
   gegebenenfalls
(H) Additive,
   mit der Maßgabe, dass das Gewichtsverhältnis von Komponente (B) zu Komponente (C) vorzugsweise im Bereich von 2:1 bis 1:2 liegt.

In einer weiteren insbesondere bevorzugten Ausführungsform handelt es sich bei den erfindungsgemäßen Massen um solche enthaltend
(A) (MeO)₂ViSiO[SiMe₂O]₂₀₀₋₂₀₀₀SiVi(OMe)₂,
(B) Vinyltriethoxysilan und/oder dessen Teilhydrolysate,
(C) basischen Stickstoff aufweisende Organosiliciumverbindungen ausgewählt aus N-(2-Aminoethyl)-3-aminopropyl-trimethoxysilan und N-(2-Aminoethyl)-3-aminopropyl-triethoxysilan und deren Teilhydrolysate,
(D) Weichmacher,
   gegebenenfalls
(E) Füllstoffe,
(F) Katalysatoren,
(G) Stabilisatoren und
   gegebenenfalls
(H) Additive,
   mit der Maßgabe, dass das Gewichtsverhältnis von Komponente (B) zu Komponente (C) vorzugsweise im Bereich von 3:2 bis 2:3 liegt.

Bevorzugt enthalten die erfindungsgemäßen Massen keine über die Komponenten (A) bis (H) hinausgehende weiteren Bestandteile.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Bei den erfindungsgemäßen Massen handelt es sich um flüssige oder viskose Mischung, bevorzugt um zähflüssig bis pastöse Massen.

Zur Bereitung der erfindungsgemäßen Massen können alle Bestandteile in beliebiger Reihenfolge miteinander vermischt werden.

Ein weiterer Gegenstand der vorliegenden Erfindung ist ein Verfahren zur Herstellung der erfindungsgemäßen Massen durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 100°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Bevorzugt werden die Komponenten (A), (B), (C) und gegebenenfalls Weichmacher (D), bevorzugt ein trimethylsilyl-terminiertes Organopolysiloxan, vermischt. Dies kann unter dem Druck der Atmosphäre oder auch unter vermindertem Druck geschehen. Anschließend können Füllstoffe (E) eingemischt werden und unter stärkerer Scherung bei höheren Drehzahlen im Mischer dispergiert. Dies geschieht in der Regel unter vermindertem Druck, um flüchtige Verbindungen, Luft und Reaktionsprodukte der Feuchtigkeit der Füllstoffe mit den Komponenten (B) und (C) zu entfernen. Weiter Bestandteile, wie Stabilisatoren (G) oder Additive (H), können vor oder mit den Füllstoffen (E) zugegeben werden. Falls Katalysator (F) eingesetzt wird, wird dieser abschließend homogen eingerührt. Dies geschieht in der Regel unter vermindertem Druck, um die pastösen Massen blasenfrei zu machen.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30°C bis 50°C und/oder mittels den normalen Wassergehalt der Luft übersteigenden Konzentrationen von Wasser durchgeführt werden. Auch das direkte Zumischen von Wasser oder wasserhaltigen Substanzen ist möglich.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen oder als Klebstoffe oder Verkittungsmassen, z.B. im Fensterbau oder bei der Herstellung von Vitrinen, sowie z.B. zur Herstellung von elastischen Schutzüberzügen, einschließlich solcher für der ständigen Einwirkung von Sonnenlicht, Regenwasser, Süß- oder Meerwasser ausgesetzten Oberflächen, oder das Gleiten verhindernden Überzügen oder von gummielastischen Formkörpern sowie für die Isolierung von elektrischen oder elektronischen Vorrichtungen. Ferner eigenen sich die erfindungsgemäßen Massen auch zur Herstellung von Beschichtungen von Oberflächen, die mittels Pinsel oder Roller aufgetragen werden oder auch aufgesprüht werden können.

Die erfindungsgemäßen Massen haben den Vorteil, dass sie leicht herzustellen sind und sich durch eine sehr hohe Lagerstabilität auszeichnen.

Des Weiteren haben die erfindungsgemäßen Massen den Vorteil, dass sie eine sehr gute Handhabbarkeit bei der Anwendung zeigen und bei einer Vielzahl von Applikation ausgezeichnete Verarbeitungseigenschaften zeigen.

Ferner haben die erfindungsgemäßen Massen den Vorteil, dass sie bei Vernetzung eine erhöhte Frühbeständigkeit zeigen.

Die erfindungsgemäßen Massen haben den Vorteil, dass sie auch unter unterschiedlichen klimatischen Bedingungen gut aushärten. Damit ist die Vernetzung unabhängiger von der Umgebungstemperatur und der Luftfeuchtigkeit. Gleichzeitig bilden die erfindungsgemäßen Massen ausreichend schnell eine sog. innere Festigkeit aus (Kohäsion), die verhindert, dass die teilvulkanisierten Massen z.B. durch Schrumpf oder durch Bewegungen im Untergrund aufreißen oder Blasen bilden und damit ihre Dichtfunktion verlieren würden.

Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Komponenten bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Die Hautbildungszeiten werden an 1 cm dick ausgespritzten Dichtstoffraupen bestimmt, in dem man mit einem frisch gespitzten Bleistift der Härte HB in regelmäßigen Abständen die Oberfläche im flachen Winkel berührt. Bleibt dabei nach langsamem Hochziehen kein Material mehr an der Bleistiftspitze hängen und eine feine Haut zieht sich ab, wird die Zeit notiert. Nach einem Tag wird die Qualität der Vulkanisation auch noch anhand der Klebrigkeit der Oberfläche und der Einreißfestigkeit der Dichtstoffraupen (sog. Fingernageltest) überprüft.

Die Durchhärtung wird mittels der sogenannten Keilmethode bestimmt. Dabei wir das Material in einem von 0-10 mm tief eingefrästen Teflonblock gleichmäßig eingebracht und täglich durch Hochziehen der Raupe vom flachen Ende her geprüft. Die Tiefe, bei der die Raupe am Boden noch klebrig hängen bleibt, wird notiert.

Für die Untersuchung der mechanischen Eigenschaften der ausgehärteten Massen wird die Paste auf einer schlecht haftenden Unterlage in dünnen Schichten mittels Spatel oder Rakel aufgebracht und bei 23°C und 50% relativer Luftfeuchtigkeit über 14 Tage ausgehärtet. Bevorzugt werden dazu Teflonformen verwendet, die 2 mm tief ausgeschnitten sind und mit der Masse vollständig gefüllt werden, und mittels Rakel wird die Oberfläche vor Härtung gleichmäßig geglättet.

Die mechanischen Werte wurden gemäß der ISO 37 an S2-Prüfkörpern bestimmt.

Die Shore-A-Härte wurde gemäß ISO 868 bestimmt.

Die Frühbeständigkeit der pastösen Massen wird mittels des sogenannten Raupenknicktest bestimmt.

Auf einem dünnen Pappstreifen wird eine Raupe von 10 mm Durchmesser und 10 cm Länge aufgebracht und mit einer Rakel auf 6 mm Schichtdicke abgezogen. Der Prüfkörper wird im Klimaraum bei 23°C und 50% rel. Luftfeuchtigkeit gelagert und geprüft. Die Raupe wird in Abständen von 30 Minuten getestet, bis eine positive Bewertung möglich ist. Zur Prüfung wird der Streifen an einer noch nicht geknickten Stelle zuerst um 90° nach hinten gebogen, z.B. über eine Tischkante, und beurteilt. Bleibt die Raupe 10 sec. unverletzt, ohne Einrisse, so wird der Steifen vollständig um 180° geknickt und nach weiteren 10 sec. wieder beurteilt. Reißt die Haut an der Oberfläche auf, ist der Test negativ (neg.). Bleibt die Haut an der Oberfläche bestehen, ist der Test positiv (pos.).

Zur Beurteilung muss unbedingt die Hautbildungszeit mit beachtet werden. Die Frühbeständigkeit kann zeitlich erst deutlich nach Vorliegen einer Hautbildung gemessen werden.

### Beispiel 1

360 g eines Polydimethylsiloxans mit Dimethoxyvinylsilylendgruppen und einer Viskosität von 100 000 mPa·s, 168 g eines trimethylsilyl-endterminierten Polydimethylsiloxans mit einer Viskosität von 1000 mPa·s, 1,8 g einer Octylphosphonsäuremischung zusammengesetzt aus 25% Trimethoxymethylsilan und 75% Octylphosphonsäure, 6,0 g Vinyl-triethoxysilan und 9,0 g N-Aminoethylaminopropyl-trimethoxysilan werden in einem Laborplanetenmischer für eine Dauer von 3 Minuten bei ca. 300 Upm und einem Druck von 200-300hPa homogenisiert. Anschließend werden 54 g einer hydrophilen, pyrogenen Kieselsäure mit einer spezifischen Oberfläche von 150 m²/g langsam bei einem Druck von 900-1100hPa eingemischt und 8 Minuten bei 800 Upm bei einem Druck von 200-300 hPa dispergiert. Abschließend wird die so erhaltene Paste mit 1,5 g eines Zinnkatalysators, der hergestellt wurde durch Umsetzung von Di-n-butylzinnoxid und Tetraethoxysilan, 3 Minuten bei 300 Upm und einem Druck von 200-300 hPa aktiviert und blasenfrei gerührt.

Die so hergestellte Masse wurde zur Aufbewahrung in feuchtigkeitsdichte Gebinde abgefüllt und vor den weiteren Prüfungen 24 Stunden bei 23° und 50% rel. Luftfeuchtigkeit gelagert.
Die erhaltenen Massen werden danach wie beschrieben untersucht bzw. 14 Tage bei 23°C und 50% rel. Luftfeuchtigkeit vernetzen gelassen und die Mechanik und Shore-Härten nach ISO 37 bzw. ISO 868 bestimmt. Die Ergebnisse finden sich in Tabelle 1.

### Beispiel 2

Die in Beispiel 1 beschriebene Arbeitsweise wird wiederholt mit der Abänderung, dass anstelle von 6,0 g Vinyl-triethoxysilan 12,0 g Vinyl-triethoxysilan eingesetzt werden.
Die Ergebnisse finden sich in Tabelle 1.

### Beispiel 3

Die in Beispiel 2 beschriebene Arbeitsweise wird wiederholt mit der Abänderung, dass anstelle von 9,0 g N-Aminoethylaminopropyl-trimethoxysilan 9,0 g N-Aminoethylaminopropyl-triethoxysilan eingesetzt werden.
Die Ergebnisse finden sich in Tabelle 1.

### Beispiel 4

Die in Beispiel 2 beschriebene Arbeitsweise wird wiederholt mit der Abänderung, dass anstelle von 1,5 g eines Zinnkatalysators, der hergestellt wurde durch Umsetzung von Di-n-butylzinnoxid und Tetraethoxysilan, 3,6 g eines Zinnkatalysators, der hergestellt wurde durch Umsetzung von Dioctylzinnoxid mit Tetraethoxysilan und Aminopropyltrimethoxysilan, als Katalysator eingesetzt wurden.
Die Ergebnisse finden sich in Tabelle 1.

**Tabelle 1: Beispiele 1-4**

| **Beispiel** | **1** | **2** | **3** | **4** |
|---|---|---|---|---|
| **Pasteneigenschaften** | | | | |
| Hautbildungszeit [min] | 16 | 18 | 20 | 15 |
| Klebrigkeit | pos. | pos. | pos. | pos. |

| **Frühbeständigkeit** | | | | |
|---|---|---|---|---|
| 30 min | neg. | neg. | neg. | neg. |
| 60 min | neg. | pos. | pos. | pos. |
| 90 min | pos. | | | |
| 120 min | | | | |
| 150 min | | | | |

| **Durchhärtung (Keilmethode)** | | | | |
|---|---|---|---|---|
| 1 Tag [mm] | 3,3 | 3,2 | 3 | 3 |
| 2 Tage [mm] | 4,9 | 4,6 | 4,5 | 4,8 |
| 3 Tage [mm] | 6,2 | 5,6 | 6 | 5,8 |

| **Mechanische Eigenschaften Folie nach ISO 37-S2** | | | | |
|---|---|---|---|---|
| 100% Modul [MPa] | 0,28 | 0,28 | 0,34 | 0,35 |
| Reißfestigkeit [MPa] | 1,54 | 1,33 | 1,35 | 1,32 |
| Reißdehnung [%] | 615 | 534 | 497 | 508 |

| **Shore-A Härte nach ISO 868** | | | | |
|---|---|---|---|---|
| Shore-A oben | 19,4 | 20,9 | 20,9 | 21,7 |
| Shore-A unten | 14,3 | 13,9 | 14,0 | 14,3 |

### Vergleichsbeispiele V1-V4

Die in den Beispielen 1-4 beschriebene Arbeitsweise wird wiederholt mit der Abänderung, dass anstelle von Vinyl-triethoxysilan Vinyl-trimethoxysilan eingesetzt wird.
Die Ergebnisse finden sich in Tabelle 2.

**Tabelle 2: Vergleichsbeispiele V1-V4**

| **Beispiel** | **V1** | **V2** | **V3** | **V4** |
|---|---|---|---|---|
| **Pasteneigenschaften** | | | | |
| Hautbildungszeit [min] | 9 | 8 | 11 | 11 |
| Klebrigkeit | pos. | pos. | pos. | pos. |

| **Frühbeständigkeit** | | | | |
|---|---|---|---|---|
| 30 min | neg. | neg. | neg. | neg. |
| 60 min | neg. | neg. | neg. | neg. |
| 90 min | neg. | neg. | neg. | neg. |
| 120 min | neg. | neg. | neg. | neg. |
| 150 min | neg. | neg. | pos. | neg. |

| **Durchhärtung (Keilmethode)** | | | | |
|---|---|---|---|---|
| 1 Tag [mm] | 3,2 | 2,9 | 2,5 | 2,5 |
| 2 Tage [mm] | 4,7 | 4,2 | 4 | 4 |
| 3 Tage [mm] | 5,8 | 5,4 | 5,1 | 5,1 |

| **Mechanische Eigenschaften Folie nach ISO 37-S2** | | | | |
|---|---|---|---|---|
| 100% Modul [MPa] | 0,31 | 0,34 | 0,33 | 0,30 |
| Reißfestigkeit [MPa] | 0,79 | 1,39 | 1,27 | 1,23 |
| Reißdehnung [%] | 353 | 579 | 537 | 507 |

| **Shore-A Härte nach ISO 868** | | | | |
|---|---|---|---|---|
| Shore-A oben | 21,0 | 21,9 | 19,4 | 23,4 |
| Shore-A unten | 14,1 | 14,4 | 9,8 | 15,0 |

### Beispiele 5-8

Die in den Beispielen 1-4 beschriebene Arbeitsweise wird wiederholt mit der Abänderung, dass anstelle von Vinyl-triethoxysilan Methyl-triethoxysilan eingesetzt wurde.
Die Ergebnisse finden sich in Tabelle 3.

**Tabelle 3: Beispiele 5-8**

| **Beispiel** | **5** | **6** | **7** | **8** |
|---|---|---|---|---|
| **Pasteneigenschaften** | | | | |
| Hautbildungszeit [min] | 9 | 7 | 7 | 12 |
| Klebrigkeit | pos. | pos. | pos. | pos. |

| **Frühbeständigkeit** | | | | |
|---|---|---|---|---|
| 30 min | neg. | neg. | pos. | neg. |
| 60 min | neg. | pos. | | pos. |
| 90 min | pos. | | | |
| 120 min | | | | |
| 150 min | | | | |

| **Durchhärtung (Keilmethode)** | | | | |
|---|---|---|---|---|
| 1 Tag [mm] | 3,8 | 3,6 | 4,2 | 3,7 |
| 2 Tage [mm] | 5,4 | 5,1 | 5,7 | 5,1 |
| 3 Tage [mm] | 6,4 | 6,0 | 6,8 | 6,1 |

| **Mechanische Eigenschaften Folie nach ISO 37-S2** | | | | |
|---|---|---|---|---|
| 100% Modul [MPa] | 0,30 | 0,34 | 0,33 | 0,32 |
| Reißfestigkeit [MPa] | 1,43 | 1,29 | 1,29 | 1,29 |
| Reißdehnung [%] | 670 | 545 | 534 | 536 |

| **Shore-A Härte nach ISO 868** | | | | |
|---|---|---|---|---|
| Shore-A oben | 19,1 | 20,4 | 19,7 | 21,0 |
| Shore-A unten | 14,3 | 15,2 | 14,8 | 14,6 |

### Vergleichsbeispiele V5-V8

Die in den Beispielen 5-8 beschriebene Arbeitsweise wird wiederholt mit der Abänderung, dass anstelle von Methyl-triethoxysilan Methyl-trimethoxysilan eingesetzt wird.
Die Ergebnisse finden sich in Tabelle 4.

**Tabelle 4: Vergleichsbeispiele V5-V8**

| **Beispiel** | **V5** | **V6** | **V7** | **V8** |
|---|---|---|---|---|
| **Pasteneigenschaften** | | | | |
| Hautbildungszeit [min] | 11 | 8 | 12 | 12 |
| Klebrigkeit | pos. | pos. | pos. | pos. |

| **Frühbeständigkeit** | | | | |
|---|---|---|---|---|
| 30 min | neg. | neg. | neg. | neg. |
| 60 min | neg. | neg. | neg. | neg. |
| 90 min | neg. | neg. | pos. | pos. |
| 120 min | neg. | pos. | | |
| 150 min | neg. | | | |

| **Durchhärtung (Keilmethode)** | | | | |
|---|---|---|---|---|
| 1 Tag [mm] | 3,0 | 3,5 | 3,7 | 2,5 |
| 2 Tage [mm] | 5,1 | 4,8 | 5,3 | 3,8 |
| 3 Tage [mm] | 6,0 | 6,0 | 6,2 | 5,8 |

| **Mechanische Eigenschaften Folie nach ISO 37-S2** | | | | |
|---|---|---|---|---|
| 100% Modul [MPa] | 0,23 | 0,33 | 0,29 | 0,27 |
| Reißfestigkeit [MPa] | 1,14 | 1,35 | 1,24 | 1,40 |
| Reißdehnung [%] | 540 | 559 | 545 | 557 |

| **Shore-A Härte nach ISO 868** | | | | |
|---|---|---|---|---|
| Shore-A oben | 20,1 | 21,4 | 20,8 | 22,5 |
| Shore-A unten | 13,6 | 12,9 | 13,0 | 14,7 |

### Beispiel 9

247 g eines Polydimethylsiloxans mit Dimethoxyvinylsilylendgruppen und einer Viskosität von 100 000 mPa·s, 164 g eines trimethylsilyl-endterminierten Polydimethylsiloxans mit einer Viskosität von 1000 mPa·s, 2,1 g einer Octylphosphonsäuremischung zusammengesetzt aus 25% Trimethoxymethylsilan und 75% Octylphosphonsäure, 14,0 g Vinyl-triethoxysilan und 10,5 g N-Aminoethylaminopropyl-trimethoxysilan werden in einem Laborplanetenmischer 3 min bei ca. 300 Upm und einem Druck von 200-300 hPa homogenisiert. Anschließend werden 228 g eines gemahlenen, unbeschichteten Marmormehls mit einer mittleren Teilchengröße von 2µm und 31,5 g einer hydrophilen, pyrogenen Kieselsäure mit einer spezifischen Oberfläche von 150 m²/g langsam bei einem Druck von 900-1100 hPa eingemischt und 8 min bei 800 Upm bei einem Druck von 200-300 hPa dispergiert. Abschließend wird die so erhaltene Paste mit 3,5 g eines Zinnkatalysators, der hergestellt wurde durch Umsetzung von Di-n-octylzinnoxid, Tetraethoxysilan und Aminopropytriethoxysilan 3 min bei 300 Upm und einem Druck von 200-300 hPa aktiviert und blasenfrei gerührt. Die so hergestellte Masse wurde zur Aufbewahrung in feuchtigkeitsdichte Gebinde abgefüllt und vor den weiteren Prüfungen 24 Stunden bei 23° und 50% rel. Luftfeuchtigkeit gelagert.
Die erhaltenen Massen werden danach wie beschrieben untersucht bzw. 14 Tage bei 23°C und 50% rel. Luftfeuchtigkeit vernetzen gelassen und die Mechanik und Shore-Härten nach ISO 37 bzw. ISO 868 bestimmt. Die Ergebnisse finden sich in Tabelle 5.

### Beispiel 10

Die in Beispiel 9 beschriebene Arbeitsweise wird wiederholt mit der Abänderung, dass anstelle des Polydimethylsiloxans mit Dimethoxyvinylsilylendgruppen ein Polydimethylsiloxan mit Dimethoxyvinylsilyl- und Dimethoxymethylsilylendgruppen eingesetzt wird.
Die Ergebnisse finden sich in Tabelle 5.

### Vergleichsbeispiel V11

Die in Beispiel 9 beschriebene Arbeitsweise wird wiederholt mit der Abänderung, dass anstelle des Polydimethylsiloxans mit Dimethoxyvinylsilylendgruppen ein Polydimethylsiloxan mit Dimethoxymethylsilylendgruppen eingesetzt wird.
Die Ergebnisse finden sich in Tabelle 5.

**Tabelle 5: Beispiele 9-10 und V11**

| **Beispiel** | **9** | **10** | **V11** |
|---|---|---|---|
| **Pasteneigenschaften** | | | |
| Hautbildungszeit [min] | 10 | 19 | 14 |
| Klebrigkeit | pos. | pos. | pos. |

| **Frühbeständigkeit** | | | |
|---|---|---|---|
| 30 min | pos. | pos. | neg. |
| 60 min | | | pos. |

| **Durchhärtung (Keilmethode)** | | | |
|---|---|---|---|
| 1 Tag [mm] | 2,9 | 2,8 | 2,7 |
| 2 Tage [mm] | 4,1 | 4,1 | 3,9 |
| 3 Tage [mm] | 5,1 | 5,0 | 4,7 |

| **Mechanische Eigenschaften Folie nach ISO 37-S2** | | | |
|---|---|---|---|
| 100% Modul [MPa] | 0,46 | 0,44 | 0,49 |
| Reißfestigkeit [MPa] | 1,47 | 1,38 | 1,44 |
| Reißdehnung [%] | 398 | 372 | 349 |

| **Shore-A Härte nach ISO 868** | | | |
|---|---|---|---|
| Shore-A oben | 25,0 | 26,1 | 29,9 |
| Shore-A unten | 18,3 | 16,9 | 20,3 |

## Patentansprüche

1. Vernetzbare Massen enthaltend
(A) Organyloxygruppen aufweisende Organopolysiloxane aus Einheiten der Formel (I)
RₐR¹_{b}(OR²)_{c}SiO_{(4-a-b-c)/2} (I),
wobei
R gleich oder verschieden sein kann und einwertige, SiC-gebundene, gegebenenfalls substituierte, von aliphatischen Kohlenstoff-Kohlenstoff-Mehrfachbindungen freie Kohlenwasserstoffreste darstellt,
R¹ gleich oder verschieden sein kann und einwertige, SiC-gebundene, gegebenenfalls substituierte Kohlenwasserstoffreste mit aliphatischen Kohlenstoff-Kohlenstoff-Mehrfachbindungen bedeutet,
R² gleich oder verschieden sein kann und einwertige, gegebenenfalls substituierte Kohlenwasserstoffreste bedeutet,
a 0, 1, 2 oder 3 ist,
b 0 oder 1 ist und
c 0, 1, 2 oder 3 ist,
mit der Maßgabe, dass in Formel (I) die Summe a+b+c≤3 ist und in mindestens einer Einheit b und c verschieden 0 sind,
(B) Organosiliciumverbindungen der Formel (II)
(R⁴O)_{d}SiR³_{(4-d)} (II),
wobei
R³ gleich oder verschieden sein kann und einwertige, SiCgebundene, gegebenenfalls substituierte Kohlenwasserstoffreste bedeutet,
R⁴ gleich oder verschieden sein kann und Wasserstoffatom oder einwertige, gegebenenfalls substituierte Kohlenwasserstoffreste bedeutet,
d 2, 3 oder 4 ist,
mit der Maßgabe, dass in Organosiliciumverbindung (B) mindestens ein Rest R⁴ mit mindestens zwei Kohlenstoffatomen anwesend ist,
und/oder deren Teilhydrolysate
und
(C) basischen Stickstoff aufweisende Organosiliciumverbindungen der Formel (III)
(R⁶O)ₑSiR⁵₍₄₋ₑ₎ (III),
wobei
R⁵ gleich oder verschieden sein kann und einwertige, SiCgebundene Reste mit basischem Stickstoff bedeutet,
R⁶ gleich oder verschieden sein kann und Wasserstoffatom oder einwertige, gegebenenfalls substituierte Kohlenwasserstoffreste bedeutet,
e 2 oder 3 ist,
und/oder deren Teilhydrolysate.

2. Vernetzbare Massen gemäß Anspruch 1, **dadurch gekennzeichnet, dass** es sich bei Organopolysiloxanen (A) um im Wesentlichen lineare, organyloxyterminierte Organopolysiloxane der Formel (IV)
(OR²)_{3-f}R¹_{f}Si-(SiR₂-O)_{g}-SiR¹_{f}(OR²)_{3-f} (IV)
handelt, wobei
R, R¹ und R² jeweils gleich oder verschieden sein können und eine der in Anspruch 1 angegebenen Bedeutungen haben,
g gleich 30 bis 5000 ist und
f gleich 0, 1 oder 2 ist,
mit der Maßgabe, dass in Formel (IV) in mindestens einer Einheit f verschieden 0 ist.

3. Vernetzbare Massen gemäß Anspruch 1 oder 2, **dadurch gekennzeichnet, dass** es sich bei Organopolysiloxanen (A) um (MeO)₂MeSiO[SiMe₂O]₂₀₀₋₂₀₀₀SiVi(OMe)₂ (MeO)₂ViSiO[SiMe₂O]₂₀₀₋₂₀₀₀SiVi(OMe)₂, (MeO)₂MeSiO[SiMe₂O]₂₀₀₋₂₀₀₀SiViMe(OMe), (MeO)ViMeSiO[SiMe₂O]₂₀₀₋₂₀₀₀SiViMe(OMe) oder (MeO)ViMeSiO[SiMe₂O]₂₀₀₋₂₀₀₀SiVi(OMe)₂ handelt.

4. Vernetzbare Massen gemäß einem oder mehreren der Ansprüche 1 bis 3, **dadurch gekennzeichnet, dass** es sich bei Organosiliciumverbindungen (B) um Silane mit mindestens einem Ethoxyrest oder deren Teilhydrolysate handelt.

5. Vernetzbare Massen gemäß einem oder mehreren der Ansprüche 1 bis 4, **dadurch gekennzeichnet, dass** es sich bei Organosiliciumverbindungen (B) um Tetraethoxysilan, Methyltriethoxysilan, Dimethyldiethoxysilan, Vinyltriethoxysilan, Vinyl-methyldiethoxysilan, Phenyl-triethoxysilan, Phenylmethyldiethoxysilan oder 1,2-Bis(triethoxysilyl)ethan oder deren Teilhydrolysate handelt.

6. Vernetzbare Massen gemäß einem oder mehreren der Ansprüche 1 bis 5, **dadurch gekennzeichnet, dass** es sich bei den Organosiliciumverbindungen (C) um 3-Aminopropyl-trimethoxysilan, 3-Aminopropyl-triethoxysilan, 3-Aminopropyl-methyldimethoxysilan, 3-Aminopropyl-methyldiethoxysilan, N-(2-Aminoethyl)-3-aminopropyl-trimethoxysilan, N-(2-Aminoethyl)-3-aminopropyl-triethoxysilan, N-(2-Aminoethyl)-3-aminopropyl-methyldimethoxysilan, N-Phenyl-3-aminopropyl-trimethoxysilan, N-Phenyl-3-aminopropyl-methyldimethoxysilan, N-Phenyl-3-aminopropyl-triethoxysilan oder N-Phenyl-3-aminopropyl-methyldiethoxysilan oder N-Alkyl-oder N,N-Dialkyl-Derivate des 3-Aminopropyl-trimethoxysilans, 3-Aminopropyl-triethoxysilans, 3-Aminopropyl-methyldimethoxysilans oder 3-Aminopropyl-methyldiethoxysilans oder deren Teilhydrolysate handelt, wobei es sich bei den genannten N-Alkylresten um Methyl-, Ethyl-, n-Propyl-, i-Propyl-, n-Butyl-, i-Butyl-, t-Butyl-, Cyclohexyl- oder die verschiedenen verzweigten oder unverzweigten Pentyl- oder Hexylreste handelt.

7. Vernetzbare Massen gemäß einem oder mehreren der Ansprüche 1 bis 6, **dadurch gekennzeichnet, dass** das Gewichtsverhältnis von Komponente (B) zu Komponente (C) im Bereich von 2:1 bis 1:2 liegt.

8. Vernetzbare Massen gemäß einem oder mehreren der Ansprüche 1 bis 7, **dadurch gekennzeichnet, dass** es sich um solche handelt enthaltend
(A) Organopolysiloxane aus Einheiten der Formel (I),
(B) Organosiliciumverbindungen der Formel (II) mit mindestens einem R⁴ gleich Ethylrest und/oder deren Teilhydrolysate,
(C) basischen Stickstoff aufweisende Organosiliciumverbindungen der Formel (III) und/oder deren Teilhydrolysate, gegebenenfalls
(D) Weichmacher,
gegebenenfalls
(E) Füllstoffe,
gegebenenfalls
(F) Katalysatoren,
gegebenenfalls
(G) Stabilisatoren und
gegebenenfalls
(H) Additive.

9. Verfahren zur Herstellung der vernetzbaren Massen gemäß einem oder mehreren der Ansprüche 1 bis 8, **dadurch gekennzeichnet, dass** alle Bestandteile in beliebiger Reihenfolge miteinander vermischt werden.

10. Formkörper, hergestellt durch Vernetzung der Massen gemäß einem oder mehreren der Ansprüche 1 bis 8.

## Claims

1. Crosslinkable compositions comprising
(A) organopolysiloxanes containing organyloxy groups and composed of units of the formula (I)
RₐR¹_{b}(OR²)_{c}SiO_{(4-a-b-c)/2} (I),
where
R may be identical or different and represents monovalent, SiC-bonded, optionally substituted hydrocarbyl radicals that are free from aliphatic carbon-carbon multiple bonds,
R¹ may be identical or different and denotes monovalent, SiC-bonded, optionally substituted hydrocarbyl radicals having aliphatic carbon-carbon multiple bonds,
R² may be identical or different and denotes monovalent, optionally substituted hydrocarbyl radicals,
a is 0, 1, 2 or 3,
b is 0 or 1, and
c is 0, 1, 2 or 3,
with the proviso that in formula (I) the sum a+b+c≤3 and b and c are other than 0 in at least one unit,
(B) organosilicon compounds of the formula (II)
(R⁴O)_{d}SiR³_{(4-d)} (II),
where
R³ may be identical or different and denotes monovalent, SiC-bonded, optionally substituted hydrocarbyl radicals,
R⁴ may be identical or different and denotes hydrogen atom or monovalent, optionally substituted hydrocarbyl radicals, and
d is 2, 3 or 4,
with the proviso that a radical R⁴ having at least two carbon atoms is present in organosilicon compound (B), and/or their partial hydrolysates
and
(C) organosilicon compounds containing basic nitrogen and of the formula (III)
(R⁶O)ₑSiR⁵₍₄₋ₑ₎ (III),
where
R⁵ may be identical or different and denotes monovalent, SiC-bonded radicals containing basic nitrogen,
R⁶ may be identical or different and denotes hydrogen atom or monovalent, optionally substituted hydrocarbyl radicals,
e is 2 or 3,
and/or their partial hydrolysates.

2. Crosslinkable compositions according to Claim 1, **characterized in that** organopolysiloxanes (A) are substantially linear, organyloxyterminated organopolysiloxanes of the formula (IV)
(OR²)_{3-f}R¹_{f}Si-(SiR₂-O)_{g}-SiR¹_{f}(OR²)_{3-f} (IV)
where
R, R¹ and R² may each be identical or different, and have one of the definitions stated in Claim 1,
g is 30 to 5000, and
f is 0, 1 or 2,
with the proviso that in formula (IV) f is other than 0 in at least one unit.

3. Crosslinkable compositions according to Claim 1 or 2, **characterized in that** organopolysiloxanes (A) are (MeO)₂MeSiO[SiMe₂O]₂₀₀₋₂₀₀₀SiVi(OMe)₂, (MeO)₂ViSiO[SiMe₂O]₂₀₀₋₂₀₀₀SiVi(OMe)₂, (MeO)₂MeSiO[SiMe₂O]₂₀₀₋₂₀₀₀SiViMe(OMe), (MeO)ViMeSiO[SiMe₂O]₂₀₀₋₂₀₀₀SiViMe(OMe) or (MeO)ViMeSiO[SiMe₂O]₂₀₀₋₂₀₀₀SiVi(OMe)_{2.}

4. Crosslinkable compositions according to one or more of Claims 1 to 3, **characterized in that** organosilicon compounds (B) are silanes having at least one ethoxy radical or their partial hydrolysates.

5. Crosslinkable compositions according to one or more of Claims 1 to 4, **characterized in that** organosilicon compounds (B) are tetraethoxysilane, methyltriethoxysilane, dimethyldiethoxysilane, vinyltriethoxysilane, vinylmethyldiethoxysilane, phenyltriethoxysilane, phenylmethyldiethoxysilane or 1,2-bis(tri-ethoxysilyl)ethane or their partial hydrolysates.

6. Crosslinkable compositions according to one or more of Claims 1 to 5, **characterized in that** the organosilicon compounds (C) are 3-aminopropyltrimethoxysilane, 3-aminopropyltriethoxysilane, 3-aminopropylmethyldimethoxysilane, 3-aminopropylmethyldiethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-phenyl-3-aminopropyltrimethoxysilane, N-phenyl-3-aminopropylmethyldimethoxysilane, N-phenyl-3-aminopropyltriethoxysilane or N-phenyl-3-aminopropylmethyldiethoxysilane, or N-alkyl or N,N-dialkyl derivatives of 3-aminopropyltrimethoxysilane, 3-aminopropyltriethoxysilane, 3-aminopropylmethyldimethoxysilane or 3-aminopropylmethyldiethoxysilane or their partial hydrolysates, where the stated N-alkyl radicals are methyl, ethyl, n-propyl, isopropyl, n-butyl, isobutyl, tert-butyl, cyclohexyl or the various branched or unbranched pentyl or hexyl radicals.

7. Crosslinkable compositions according to one or more of Claims 1 to 6, **characterized in that** the weight ratio of component (B) to component (C) is in the range from 2:1 to 1:2.

8. Crosslinkable compositions according to one or more of Claims 1 to 7, **characterized in that** they are those comprising
(A) organopolysiloxanes composed of units of the formula (I),
(B) organosilicon compounds of the formula (II) having at least one ethyl radical R⁴ and/or their partial hydrolysates,
(C) organosilicon compounds containing basic nitrogen and of the formula (III) and/or their partial hydrolysates,
(D) optionally plasticizers,
optionally
(E) fillers,
optionally
(F) catalysts,
optionally
(G) stabilizers and
optionally
(H) additives.

9. Method for producing the crosslinkable compositions according to one or more of Claims 1 to 8, **characterized in that** all of the constituents are mixed with one another in any order.

10. Molding produced by crosslinking the compositions according to one or more of Claims 1 to 8.

## Revendications

1. Masses réticulables contenant
(A) des organopolysiloxanes présentant des groupes organyloxy composés de motifs de formule (I)
RₐR¹_{b}(OR²)_{c}SiO_{(4-a-b-c)/2} (I),
R pouvant être identique ou différent et représentant des radicaux hydrocarbonés monovalents, liés par SiC, éventuellement substitués, exempts de liaisons aliphatiques multiples carbone-carbone,
R¹ pouvant être identique ou différent et signifiant des radicaux hydrocarbonés monovalents, liés par SiC, éventuellement substitués comportant des liaisons aliphatiques multiples carbone-carbone,
R² pouvant être identique ou différent et signifiant des radicaux hydrocarbonés monovalents, éventuellement substitués,
a étant 0, 1, 2 ou 3,
b étant 0 ou 1 et
c étant 0, 1, 2 ou 3,
étant entendu que dans la formule (I), la somme a + b + c ≤ 3 et, dans au moins un motif, b et c sont différents de 0,
(B) des composés d'organosilicium de formule (II)
(R⁴O)_{d}SiR³_{(4-d)} (II),
R³ pouvant être identique ou différent et signifiant des radicaux hydrocarbonés monovalents, liés par SiC éventuellement substitués,
R⁴ pouvant être identique ou différent et signifiant un atome d'hydrogène ou des radicaux hydrocarbonés monovalents, éventuellement substitués,
d étant 2, 3 ou 4,
étant entendu que dans le composé d'organosilicium (B) au moins un radical R⁴ comportant au moins deux atomes de carbone est présent,
et/ou leurs hydrolysats partiels et
(C) des composés d'organosilicium présentant un azote basique de formule (III)
(R⁶O)ₑSiR⁵₍₄₋ₑ₎ (III),
R⁵ pouvant être identique ou différent et signifiant des radicaux monovalents, liés par SiC, comportant un azote basique,
R⁶ pouvant être identique ou différent et signifiant un atome d'hydrogène ou des radicaux hydrocarbonés monovalents, éventuellement substitués,
e étant 2 ou 3,
et/ou leurs hydrolysats partiels.

2. Masses réticulables selon la revendication 1, **caractérisées en ce que** les organopolysiloxanes (A) sont essentiellement des organopolysiloxanes de formule (IV) linéaires, à terminaison organyloxy
(OR²)_{3-f}R¹_{f}Si-(SiR₂-O)_{g}-SiR¹_{f}(OR²)_{3-f} (IV)
R, R¹ et R² pouvant à chaque fois être identiques ou différents et possédant une des significations indiquées dans la revendication 1,
g étant égal à 30 à 5000 et
f étant égal à 0, 1 ou 2,
étant entendu que dans la formule (IV), dans au moins un motif, f est différent de 0.

3. Masses réticulables selon la revendication 1 ou 2, **caractérisées en ce que** les organopolysiloxanes (A) sont (MeO)₂MeSiO[SiMe₂O]₂₀₀₋₂₀₀₀SiVi(OMe)₂, (MeO)₂ViSiO[SiMe₂O]₂₀₀₋₂₀₀₀SiVi(OMe)₂, (MeO)₂MeSiO[SiMe₂O]₂₀₀₋₂₀₀₀SiViMe(OMe), (MeO)ViMeSiO[SiMe₂O]₂₀₀₋₂₀₀₀SiViMe(OMe) ou (MeO)ViMeSiO[SiMe₂O]₂₀₀₋₂₀₀₀SiVi(OMe)₂.

4. Masses réticulables selon l'une ou plusieurs des revendications 1 à 3, **caractérisées en ce que** les composés d'organosilicium (B) sont des silanes comportant au moins un radical éthoxy ou leurs hydrolysats partiels.

5. Masses réticulables selon l'une ou plusieurs des revendications 1 à 4, **caractérisées en ce que** les composés d'organosilicium (B) sont le tétraéthoxysilane, le méthyltriéthoxysilane, le diméthyldiéthoxysilane, le vinyltriéthoxysilane, le vinylméthyldiéthoxysilane, le phényltriéthoxysilane, le phénylméthyldiéthoxysilane ou le 1,2-bis(triéthoxysilyl)éthane ou leurs hydrolysats partiels.

6. Masses réticulables selon l'une ou plusieurs des revendications 1 à 5, **caractérisées en ce que** les composés d'organosilicium (C) sont le 3-aminopropyl-triméthoxysilane, le 3-amino-propyl-triéthoxysilane, le 3-aminopropyl-méthyldiméthoxysilane, le 3-aminopropyl-méthyldiéthoxysilane, le N-(2-aminoéthyl)-3-aminopropyl-triméthoxysilane, le N-(2-aminoéthyl)-3-aminopropyl-triéthoxysilane, le N-(2-aminoéthyl)-3-aminopropyl-méthyldiméthoxysilane, le N-phényl-3-aminopropyl-triméthoxysilane, le N-phényl-3-aminopropyl-méthyldiméthoxysilane, le N-phényl-3-aminopropyl-triéthoxysilane ou le N-phényl-3-aminopropyl-méthyldiéthoxysilane ou les dérivés N-alkyle ou N,N-dialkyle du 3-aminopropyl-triméthoxysilane, du 3-aminopropyl-triéthoxysilane, du 3-aminopropyl-méthyldiméthoxysilane ou du 3-aminopropyl-méthyldiéthoxysilane ou leurs hydrolysats partiels, lesdits radicaux N-alkyle étant méthyle, éthyle, n-propyle, i-propyle, n-butyle, i-butyle, t-butyle, cyclohexyle ou les différents radicaux pentyle ou hexyle ramifiés ou non ramifiés.

7. Masses réticulables selon l'une ou plusieurs des revendications 1 à 6, **caractérisées en ce que** le rapport pondéral du composant (B) au composant (C) se situe dans la plage de 2:1 à 1:2.

8. Masses réticulables selon l'une ou plusieurs des revendications 1 à 7, **caractérisées en ce que** ce sont celles contenant
(A) des organopolysiloxanes composés de motifs de formule (I),
(B) des composés d'organosilicium de formule (II) comportant au moins un R⁴ égal à un radical éthyle et/ou leurs hydrolysats partiels,
(C) des composés d'organosilicium présentant un azote basique de formule (III) et/ou leurs hydrolysats partiels,
éventuellement
(D) des assouplissants,
éventuellement
(E) des charges,
éventuellement
(F) des catalyseurs,
éventuellement
(G) des stabilisants et
éventuellement
(H) des additifs.

9. Procédé pour la préparation des masses réticulables selon l'une ou plusieurs des revendications 1 à 8, **caractérisé en ce que** tous les ingrédients sont mélangés ensemble dans un ordre quelconque.

10. Corps moulé, préparé par réticulation des masses selon l'une ou plusieurs des revendications 1 à 8.
